# EUROPEAN PATENT APPLICATION

(11) **EP 2 811 109 A1**
(43) Date of publication of application: **10.12.2014**
(21) Application number: 13170537.8
(22) Date of filing: 04.06.2013
(51) Int. Cl.: E21B 43/30, E21B 7/06, E21B 7/20, E21B 41/00

(54) **Method of establishing a well**

(71) Applicant: Kongsberg Devotek AS, 3604 Kongsberg (NO)
(72) Inventor: Kleven, Per Håvard, N-3612 Kongsberg (NO)
(74) Representative: Onsagers AS

(57) **Abstract**

A method of establishing a well, comprising the steps of: establishing a first, primary bore hole (1) using a first boring apparatus (4); establishing a plurality of secondary bore holes (16) extending from the primary bore hole, wherein each secondary bore hole is established using a second boring apparatus (11), wherein each second boring apparatus comprises a boring unit (1) which deploys at least one conduit (14, 15) in the secondary bore hole during the establishment of the secondary bore hole; and, for each secondary bore hole, when the establishment of the secondary bore hole is completed, utilising the at least one conduit as part of a conduit system to bring a fluid down and/or up the secondary bore hole.

## Description

The present invention relates to a method of establishing a well. In particular, the invention relates to a method of deploying conduits in secondary bore holes extending from a main or primary bore hole. Such a well may for example be a geothermal well, i.e. a well for exploitation of geothermal energy, or a hydrocarbon well, i.e. a well for production of hydrocarbons.

The present invention also relates to a well which is established according to the method.

The invention also relates to a boring initiation arrangement for us with the method.

Different methods for establishing and operating geothermal wells are known in the art, e.g. as is disclosed in EP 0939879 B1, US 4223729, WO 1996/023181 and DE 4229185 C2.

EP 0939879 B1 discloses a geothermal energy plant for exploitation of geothermal energy from hot dry rock (HDR) formations. The plant comprises a plurality of supply bore holes, a plurality of heat absorbing bore holes and a return bore hole. In operation, water is circulated down the supply bore holes, through the heat absorbing bore holes and up through the return bore hole. Consequently, the plant of EP 0939879 B1 requires separate down and up-holes to be bored.

US 4223729 discloses a method of extracting heat energy from a HDR formation. The method comprises boring two holes to the formation, fracturing the formation in the region between the two bore holes and circulating a fluid down one of the bore holes, through the fractured formation and up through the second bore hole. Consequently, the method of US 4223729 also requires separate down and up- holes to be bored.

WO 1996/023181 discloses a method of using an abandoned hydrocarbon well for exploiting geothermal energy. According to the method, a horizontal bore hole is bored between two abandoned, vertical bore holes and a fluid is circulated down one of the vertical bore holes, through the horizontal bore hole and up through the second vertical bore hole. Consequently, the method of NO 302781 B also requires separate down and up-holes to be bored at one point in time, albeit for a different purpose than geothermal energy exploitation.

DE 4229185 C2 also discloses a plant for exploitation of geothermal energy comprising a plurality of supply bore holes, a plurality of heat absorbing bore holes and a return bore hole. Consequently, the plant of DE 4229185 C2 requires separate down and up-holes to be bored.

Consequently, known methods comprise boring at least two holes from the surface into the geothermal formation, connecting the holes, e.g. by hydraulic fracturing or by boring one or a plurality of connecting bores, and circulating a fluid through the holes and the geothermal formation such that thermal energy can be brought to the surface.

However, a frequently prohibiting factor for the exploitation of deep laying geothermal formations in this manner is the cost of boring the required holes.

Means for addressing this issue was presented by Prof Arild Rodland at the conference Teknologidagene which was held in Kongsberg, Norway on November 4, 2009. At the conference Prof Rodland held a presentation entitled "ElektroPuls Boring (EPB)" during which he presented a layout for a geothermal well having an essentially vertical and approximately 3000 m deep main bore hole and a plurality of non-vertical heat exchange bore holes extending in different directions from the bottom of the main bore hole. According to the presented concept, an insulated line or conduit is arranged in each of the main and heat exchange bores. At the bottom of the main bore hole, the insulated conduits are interconnected such that water can be brought to flow down the main bore hole and further down each of the heat exchange bore holes in the annular spaces formed between the insulated conduits and the inner wall of the bores. The insulated conduit in each heat exchange bore hole is open at its end such that the water, now heated, can be returned to the well surface in the insulated conduit.

However, a problem with this concept is that it is difficult to deploy the insulated conduits in the heat exchange bore holes. The heat exchange bore holes do not generally run in a vertical direction. Consequently, once bored, the heat exchange bore holes are susceptible to being partially or completely blocked, which may hinder and in worse case even prohibit the deployment of the insulated conduits.

This is a general problem when trying to establish a secondary, non-vertical bore hole extending from a primary bore hole.

The method according to present invention addresses this issue and seeks to alleviate the afore-mentioned problem. In particular, the method seeks to enable simple and efficient deployment of conduits in secondary bore holes extending from a main or primary bore hole.

According to one aspect of the invention, the invention relates to a method of establishing and operating a well for exploitation of geothermal energy, especially for exploitation of deep laying geothermal geological formations.

According to another aspect of the invention, the invention relates to a method of increasing the recovery of hydrocarbons in a hydrocarbon well.

The method according to the present invention comprises the steps of:
- establishing a first, primary bore hole using a first boring unit,
- establishing a plurality of secondary bore holes extending from the primary bore hole, wherein each secondary bore hole is established using a second boring unit, which is arranged to deploy at least one conduit in the secondary bore hole during the establishment of the secondary bore hole (16), and
- for each secondary bore hole, when the establishment of the secondary bore hole is completed, utilising the at least one conduit as part of a conduit system to bring a fluid down and/or up the secondary bore hole.

The primary and secondary bore holes may be established by means of boring units comprising rotating bore crowns. However, the bore holes may alternatively or complementary be established by means of other abrasive techniques, or a combination thereof, e.g. utilising high pressure liquids, heat, plasma, electric fields, etc. For example, the bore holes may alternatively or complementary be established using percussion drilling, electro pulse boring or other techniques which are known in the art. Consequently, the term "boring unit" should not be interpreted in a restrictive sense but is understood to encompass units for realisation of the above-mentioned techniques of establishing bore holes.

The deployment of the at least one conduit may advantageously be realised by the second boring unit pulling the at least one conduit along as the boring of the secondary bore hole progresses.

It may be advantageous to utilise the at least one conduit as a part of a circulation system to circulate a drilling fluid in the secondary bore hole during the establishment of the secondary bore hole.

If the method is used for establishing and operating a well for exploitation of geothermal energy, the first boring unit may advantageously be used to establish, e.g. bore, a first, primary or main bore hole down to the geological formation carrying the thermal energy. When the geological formation has been reached, the first boring unit may advantageously be pulled from the primary bore hole and a plurality of secondary or heat exchange bore holes may advantageously be established, e.g. bored, extending from the primary bore hole into the geothermal formation. The secondary bore holes may advantageously be established using a plurality of second boring unit. It may be advantageous to arrange each second boring unit individually operable. Each second boring unit is arranged to deploy at least one conduit in the secondary bore hole during the boring operation.

During the establishment of each secondary bore hole, the at least one conduit may advantageously be used to circulate a drilling fluid through the boring unit such that boring sediments can be removed from the boring area.

When each secondary bore hole is completed, the second boring unit is shut down but is not pulled from the secondary bore hole. The at least one conduit, which was deployed by the boring unit during the boring operation, is then used to circulate a thermal energy carrying fluid through the secondary bore hole, thus doing away with the need to deploy separate conduits for the fluid in the completed secondary bore hole. Consequently, the at least one conduit that was optionally used to provide drilling fluid during the establishment of the secondary bore hole, is used to circulate the thermal energy carrying fluid during the operation of the well.

To this effect, the second boring unit may advantageously be by-passed using a valve unit comprising by-pass valves which are operated when the boring operation is completed.

In the primary bore hole it may advantageous to connect the conduits emerging from the secondary bore holes to one or a plurality of common or shared up-hole conduits which transports the energy rich, i.e. hot, energy carrying fluid to the surface of the well.

When the geothermal well is in operation, the energy transported to the surface by the energy carrying fluid can be utilised in a known fashion, e.g. be transformed into electrical energy or be exploited in other ways known by the person skilled in the art.

If the method is used for establishing and operating a hydrocarbon well, the at least one conduit deployed by the boring unit in each secondary bore hole may be used to collect hydrocarbons originating from the respective secondary bore hole and bring the hydrocarbons up-hole. Alternatively or complementary, the at least one conduit may be used for injecting a fluid, e.g. water, into the secondary bore hole.

In the following, embodiments of the invention will be disclosed in more detail with reference to the appended drawings.
Fig.1 discloses a step of boring a first, primary bore hole during the establishment of a well according to one embodiment of the present invention.
Fig. 2 discloses an embodiment of a first boring apparatus which may be used for boring the primary bore hole.
Figs. 3A and 3B disclose a step of lowering a boring initiation arrangement down the primary bore hole.
Fig. 4 discloses an embodiment of a boring initiation arrangement.
Figs. 5A and 5B disclose a step of boring a plurality of secondary bore holes extending from the primary bore hole.
Fig. 6 discloses an embodiment of a boring apparatus for boring a secondary bore hole.
Figs. 7 and 8 disclose the circulation of a fluid, e.g. a drilling fluid or a thermal energy carrying fluid, in the secondary bore holes.
Figs. 9 and 10 disclose an alternative embodiment of the circulation of a fluid in the secondary bore holes.
Fig. 11 discloses an embodiment of a geothermal well in operation.
Figs. 12-14 disclose different alternatives of circulating a thermal energy carrying fluid in a secondary bore hole of a geothermal well.
Figs. 15-17 disclose different alternatives of circulating a thermal energy carrying fluid in a primary, main bore hole of a geothermal well.

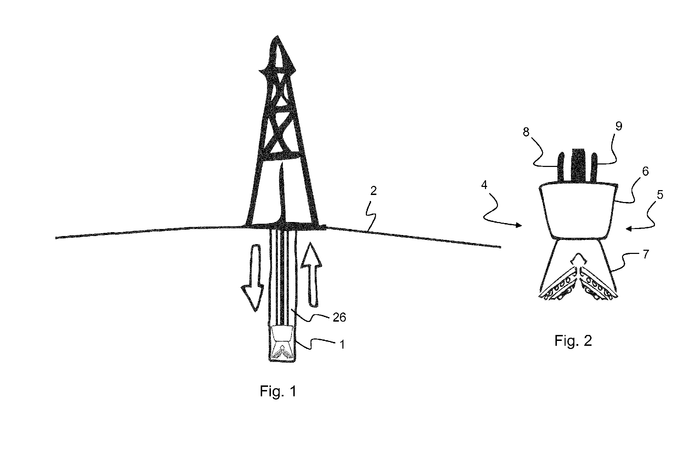

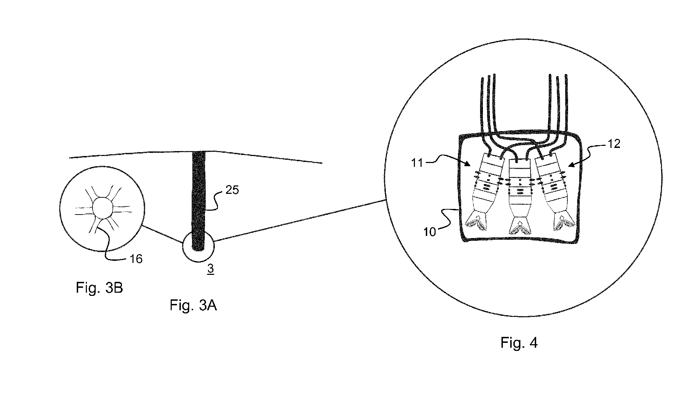

Fig. 1 discloses an initial step of establishing a well for exploitation of geothermal energy according to the method of the present invention. This initial step comprises boring a main or primary bore hole 1 from the surface 2 of the earth, or from the bottom of the ocean or a lake, into a geological formation 3 carrying geothermal energy or to a position just above such a formation 3 (see Fig. 3A). Such a formation 3 may typically be at a depth of 5000-9000 m, but may be shallower of deeper depending on the particulars of the boring locale. The boring of the primary bore hole 1 is performed using a first boring apparatus 4 comprising a first boring unit 5. As previously stated, the first boring unit 5 may be any type of suitable boring unit known in the art. However, it may be advantageous to use a boring unit 5 comprising an on-board drive unit 6 for operating a bore crown 7 of the boring unit 5. The boring apparatus 4 may also comprise at least one conduit 8, 9. The at least one conduit 8, 9 may be connected to the boring unit 5 for circulating a drilling fluid between the earth surface 2 and the boring unit 5 during the boring operation in order to remove boring sediments from the boring area. The at least one conduit 8, 9 may for example comprise a first conduit 8 which may act as a down-hole conduit and a second conduit 9 which may act as an up-hole conduit for circulating the drilling fluid. However, as is known in the art, the annular space 26 formed between the at least one conduit 8, 9 and the inner wall of the bore hole 1 may also be utilised for the circulation of the drilling fluid. For example, the drilling fluid can be brought down-hole via the annular space 27, and the drilling fluid and boring sediments mixture can be brought up-hole via the at least one conduit 8, 9. Alternatively, the drilling fluid can be brought down-hole via the at least one conduit 8, 9, and the drilling fluid and boring sediments mixture can be brought up-hole via the annular space 26.

Depending on the particulars of the bedrock through which the primary bore hole 1 is bored, the primary bore hole 1, or parts thereof, may be supplied with a lining or a casing 25 (see Fig. 3A).

The primary bore hole 1, which may be vertical or non-vertical, may typically have a diameter within the interval of 20 to 25 inches (50 to 64 cm). However, the primary bore hole 1 may have a larger or smaller diameter.

When the primary bore hole 1 has reached the depth of the geothermal formation 3, the first boring unit 5 and said at least one conduit 8, 9 is advantageously pulled from the primary bore hole 1 and a plurality of secondary or heat exchange bore holes 16 extending into the geothermal energy carrying geological formation 3 are established, e.g. bored, using a plurality of second boring apparatus 11. The number of secondary bore holes 16 may, for example, be six or eight.

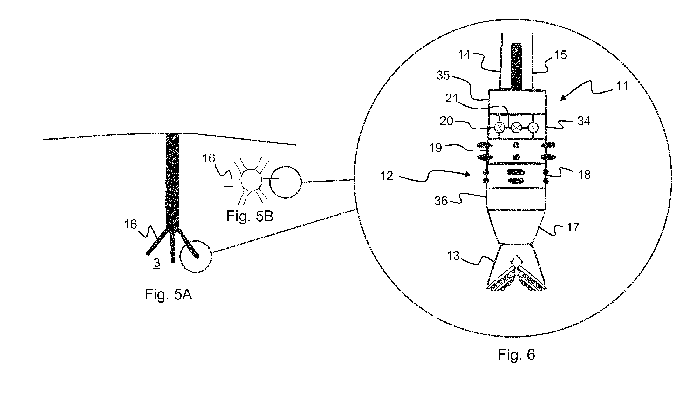

Each second boring apparatus 11 comprises a second boring unit 12, which, in the embodiment disclosed in Fig. 6, comprises a bore crown 13. Each second boring apparatus 11 also comprises at least one flexible conduit 14, 15, which advantageously is connected to the boring unit 12. It may be advantageous to arrange each second boring unit 12 individually and autonomously operable such that it can be operated independently of the other second boring units. To this end it may be advantageous to equip each second boring unit 12 with an on-board drive unit 17 for operating the bore crown 13 and also with a traction unit 18 and a stabilization unit 19 for propelling the boring unit 12 forward and for steering the boring unit 12 in a manner which, as such, is known in the art. To this end, the traction unit 18 and the stabilization unit 19 may advantageously comprise a control system and actuators (not disclosed) for providing directional control of the boring unit 12. Also, it may be advantageous to equip each boring unit 12 with a sensor unit 35 comprising sensors and instruments (not disclosed) for measuring operation related information, such as the position of the boring unit 12, and information related to the environment in the bore hole, such as down-hole temperature and pressure. This information may advantageously be lead to the surface 2 via one or a plurality of signal lines (not disclosed), e.g. running in parallel with the at least one conduit 14, 15. These signal lines may also be used to send operating instructions to the boring unit 12, e.g. directional control signals to the traction unit 18 and the stabilization unit 19.

Prior to initiating the boring of the secondary bore holes 16, it may be advantageous to lower a boring initiation arrangement 10 into the primary bore hole 1 and position the boring initiation arrangement 10 at the location where the secondary bore holes 16 are to be established. Optionally, the boring initiation arrangement 10 may be secured to the inner wall or lining of the primary bore hole 1 at this location.

According to one embodiment of the invention, the boring initiation arrangement 10 comprises guiding means or guiding elements or members (not disclosed) for guiding each second boring unit 12 in a desired, controlled direction at the initial stage of its boring operation. In this embodiment the boring units 12 are lowered into the primary bore hole 1 after the positioning of the boring initiation arrangement 10 such that each boring unit 12 is guided in the right boring direction by the guiding means. It may be advantageous to arrange the guiding means around a circumference of the boring initiation arrangement 10 equidistant from each other such that the secondary bore holes 16 can be made to radiate non-vertically from the primary bore hole 1 in different directions. Alternatively, the boring initiation arrangement 10 comprises only one guiding means which is rotated between the deployment of each boring unit 12. Depending on the diameter of the primary bore hole 1 and, consequently, the space available in the primary bore hole 1, it may be advantageous to lower the boring units 12 into the primary bore hole 1 sequentially, i.e. one after the other, such that a boring unit is not deployed until the previous boring unit has commenced its boring operation and made its way into the bedrock, thus allowing room for the next boring unit to be lowered into the primary bore hole 1.

According to another embodiment of the invention, the boring units 12 are already fitted in the boring initiation arrangement 10 when it is lowered into the primary bore hole 1, as is disclosed in Fig. 4. This embodiment enables more or less concurrent deployment of the boring units 12 which may be advantageous as it enables the establishment of the secondary bore holes to be initiated simultaneously, which cuts the time required to finalize the second bore holes. In this embodiment it may be advantageous to arrange the boring units 12 around a circumference of the boring initiation arrangement 10 equidistant from each other such that the secondary bore holes 16 can be made to radiate non-vertically from the primary bore hole 1 in different directions. The boring units 12 may be arranged in one plane, as is illustrated in Fig. 4. Alternatively, in order to reduce the overall diameter of the boring initiation arrangement 10, the boring units 12 may be positioned at different horizontal positions in the boring initiation arrangement 10. When the boring initiation arrangement 10 has been positioned at the intended position in the primary bore hole 1 and, optionally, has been secured to the inner wall or lining of the hole 1, the second boring units 12 are activated and brought to bore the plurality of secondary bore holes 16 extending from the primary bore hole 1 and into the geothermal formation 3.

Depending on the particulars of the bedrock through which the secondary bore holes 16 are bored, each secondary bore hole 16, or parts thereof, e.g. the part of the secondary bore hole which connects to the primary bore hole, may be supplied with a lining or a casing (not disclosed).

The secondary bore holes 16 may have a diameter within the interval of 7 to 8 inches (17 to 21 cm). However, the secondary bore holes may have a larger or a smaller diameter.

During the boring of each secondary bore hole 16, the boring unit 12 is arranged to deploy the at least one conduit 14, 15 in the secondary bore hole 16 as the boring progresses. For example, the boring unit 12 may be arranged to pull or otherwise bring along the at least one conduit 14, 15 as the boring progresses. During the boring operation, it may be advantageous to utilise the at least one conduit 14, 15 as part of a circulation system to circulate a drilling fluid about or through the boring unit 12 in order to remove boring sediments from the boring area. In such as case, the annular space between the at least one conduit 14, 15 and the inner wall of the secondary bore hole 16 or, if present, the lining, may form part of the drilling fluid circuit. For example, the drilling fluid may be brought down-hole via the at least one conduit 14, 15 such that the drilling fluid and boring sediments mixture can be returned via the annular space. Alternatively, the drilling fluid may be brought down-hole via the annular space such that the drilling fluid and boring sediments mixture can be returned via the at least one conduit 14, 15. According to yet another alternative, the at least one conduit may comprise a first, down-hole conduit 14 and a second, up-hole conduit 15 such that the drilling fluid can be brought down-hole via the down-hole conduit 14 and the drilling fluid and boring sediments mixture can be brought up-hole via the up-hole conduit 15.

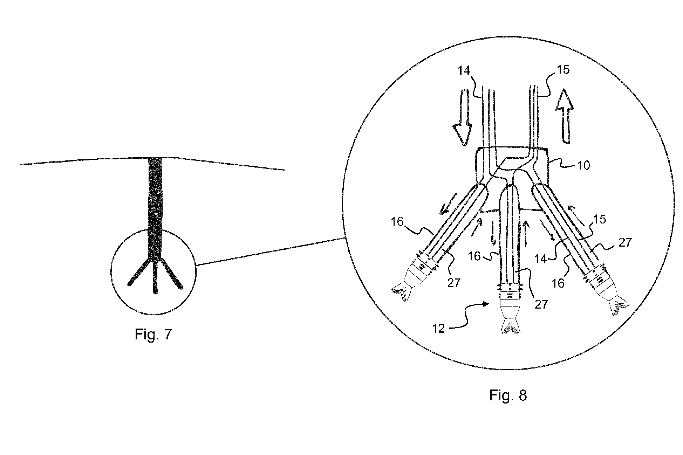

According to one embodiment of the invention, the at least one conduit 14, 15 run from the boring unit 12 all the way to the surface 2 of the well, in which case the drilling fluid and/or the drilling fluid and boring sediments mixture can be circulated to the surface 2 by means of the at least one conduit 14, 15, as is disclosed in Fig. 8.

Alternatively, the at least one conduit 14, 15 may be configured to run only between the boring unit 12 and the boring initiation arrangement 10. In this case at least one separate conduit (not disclosed) may be deployed in the primary bore hole 1 to circulate the drilling fluid and/or the drilling fluid and boring sediments mixture to the surface 2. Again, the annular space formed between the separate conduit (not disclosed) and the inner wall of the primary bore hole 1 may be used for the circulation of the drilling fluid and/or the boring sediments. Alternatively or in addition, it may be advantageous to arrange the secondary bore holes 16 such that they start a predetermined distance above the bottom of the primary bore hole 1. In this way the section of the primary bore hole 1 which is positioned bellow the entrances of the secondary bore holes 16 can be used to receive the boring sediments or part thereof, whereby the boring sediments resulting from the boring of the secondary bore holes 16 need not be transported to the surface 2 but can be deposited at the bottom of the primary bore hole 1.

In order to facilitate the removal of the boring sediments from the boring areas of the boring units 12, the boring initiation arrangement 10 may advantageously comprise a pump unit (not disclosed) comprising one or a plurality of pumps which are arranged to assist the pumping of the drilling fluid and boring sediment to the surface 2. Alternatively or complementary, it may be advantageous to position such a pump unit 36 in the boring units 12 (see Fig. 6).

When a secondary bore hole 16 has reached a predetermined length, which for example may be within the interval of 500-4000 m, but which preferably is at least 1000 m, e.g. 2000 m, the boring operation of the secondary boring units 12 is terminated. It is to be noted, however, that the different secondary bore holes 16, once finalised or completed, do not need to be of equal length. If the at least one conduit 14, 15 has been used to circulate a drilling fluid during the boring operation, the drilling fluid and any remaining drilling sediments are flushed from the at least one conduit 14, 15.

According to the invention, when a secondary bore hole 16 is completed, the boring unit 12 is not pulled from the secondary bore hole 16 but is left at its shut-down position, i.e. at the blind end of the secondary bore hole 16. However, the different sensors and instruments of the sensor unit 35 of the boring unit 12 may still be utilised to gather information related to the environment in the bore hole, such as down-hole temperature and pressure, and send such information to the surface 2.

Consequently, when all secondary bore holes 16 are completed, there are at least one conduit 14, 15 running between boring unit 12 and the boring initiation arrangement 10 in each secondary bore hole 16, i.e. through-out the whole length of the secondary bore hole. Advantageously, these conduits 14, 15 are used as part of a circulation system to circulate a thermal energy carrying fluid in the secondary bore holes 16, thus doing away with the need to deploy separate conduits for the thermal energy carrying fluid in these holes 16.

The conduits 14, 15 emerging from the secondary bore holes 16, or a subset of these conduits 14, 15, can be configured to run all the way to the well surface 2, in which case the conduits 14, 15 can be used to circulate the thermal energy carrying fluid all the way to the surface 2.

However, the thermal energy carrying fluid can be circulated in the well by means of different circulation regimes.

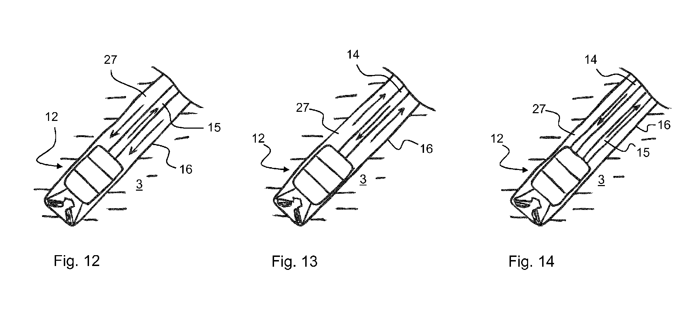

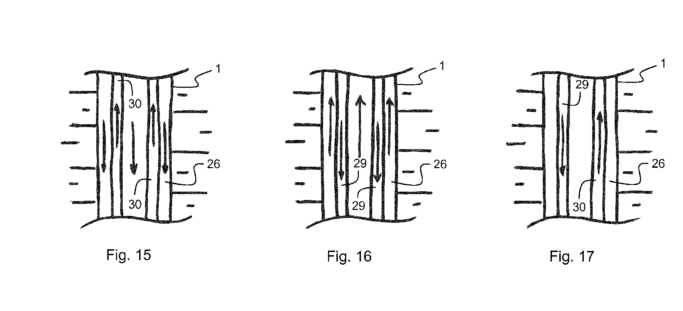

If an open circulation regime is preferred, i.e. a regime in which the thermal energy carrying fluid is allowed to come into contact with the bedrock, it may be advantageous to utilize an annular space 26 in the primary bore hole 1 and an annular space 27 in the secondary bore holes 16 for circulating the fluid (see Figs. 12-17). According to one circulation regime, the fluid is brought down-hole via the annular spaces 26, 27 and up-hole via the at least one conduit 15 in each secondary bore hole 16 and via at least one conduit 30 in the primary bore hole 1, as is disclosed in Figs. 12 and 15. According to an alternative circulation regime, the fluid is brought down-hole via at least one conduit 29 in the primary bore hole 1 and via the at least one conduit 14 in each secondary bore hole 16, and up-hole via the annular spaces 26 and 27, as is disclosed in Figs. 13 and 16.

If a closed system is preferred, i.e. a system in which the thermal energy carrying fluid is not allowed to come into contact with the bedrock, the at least one conduit 14, 15 in each secondary bore hole 16 must comprise at least one down-hole conduit 14 and at least one up-hole conduit 15, as is disclosed in Fig. 14. Furthermore, if the conduits 14, 15 were used to circulate a drilling fluid by the bore crown 13 during the boring operation, the fluid passage to the bore crown 13 need to be closed to prevent the thermal energy carrying fluid from leaking out into the bedrock. Therefore, the second boring unit 12 may advantageously comprise a valve unit 34 comprising a by-pass system, as is disclosed in Fig. 6, which allows the bore crown 13 to be bypassed such that the thermal energy carrying fluid can be circulated in the secondary bore hole without coming into direct contact with the geothermal formation 3. For example, the valve unit 34 may advantageously comprise a by-pass valves 20 positioned up-hole of the bore crown 13. When the secondary bore hole 16 is completed, the by-pass valves 20 are activated such that a by-pass conduit 21 is opened between the down-hole conduit 14 and the up-hole conduit 15 and such that the conduit ends leading to the bore crown 13 are closed, whereby the bore crown 13 is bypassed.

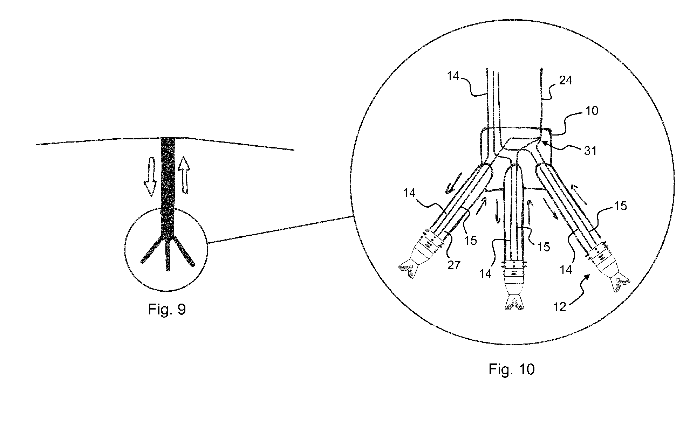

According to one circulation regime, the conduits 14 and 15 of each secondary bore hole 16 run to the surface 2, whereby the thermal energy carrying fluid is brought to the surface from the secondary bore holes 16 via a plurality of parallel conduit loops, e.g. in a similar fashion as is disclosed in Fig. 8. However, in order to minimize heat losses when the fluid is brought to the surface, it may be advantageous to interconnect the up-hole conduits 15 emerging from at least two of the secondary bore holes 16 using a valve system 31 in the boring initiation arrangement 10 such that they come to share at least one common up-hole conduit 24 running up through the primary bore hole 1, e.g. in a similar fashion as is disclosed in Fig. 10. In such a configuration, the up-hole conduits 15 emerging from the secondary bore holes 16 can be interconnected in pairs such that the number of up-hole conduits 24 running through the primary bore hole 1 is half of the number of down-hole conduits 14 running through the same. Alternatively, all of the up-hole conduits 15 can be interconnected into one up-hole conduit 24 such that only one up-hole conduit 24 run through the primary bore hole 1. The down-hole conduits 14 may be interconnected in the same way.

It may be advantageous to arrange a pump unit 31 in the boring initiation arrangement 10 to assist the circulation of the thermal energy carrying fluid. According to one embodiment of the boring apparatus 10, the pump unit that was utilised to assist the circulation of the drilling fluid during the boring phase, i.e. during the boring of the secondary bore holes 16, may be used to assist the circulation of the thermal carrying fluid in the production phase, i.e. during the energy recovery.

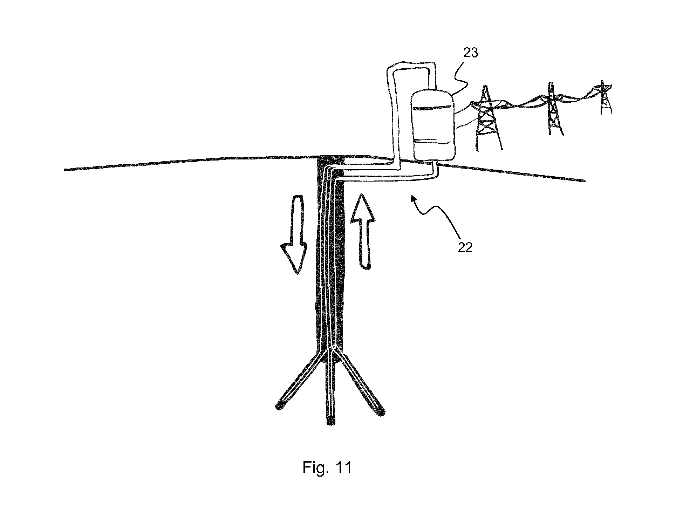

At the surface 2, the hot fluid emerging from the up-hole conduit or conduits 24, 30 or, as the case may be, from the annular space 26 of the primary bore hole 1, is led to an energy systems 23 (see Fig. 11) which allows the energy brought to the surface by the thermal carrying fluid to be exploited, e.g. directly as heat energy or by conversion to other forms of energy, e.g. electrical energy. Such systems 23, which may comprise heat exchangers, turbines, generators, etc., are known in the art and will not be discussed further here. After passing the energy system 23, the fluid is led to the down-hole conduit or conduits 14, 29 or, as the case may be, to the annular space 26 of the primary bore hole 1 to be circulated through the secondary bore holes 16 yet again. Consequently, the thermal energy carrying fluid is brought to circulate alternately through the geothermal formation 3 and the energy system 23 in a loop 22 which may be open, i.e. allowing the fluid to come into contact with the bedrock, or closed, i.e. keeping the fluid confined within the conduits.

If the loop 22 is closed and the temperature of the thermal energy carrying fluid at the surface 2 is at the boiling point of the fluid, it may advantageous to incorporate a steam turbine and a condensation chamber in the loop 22.

According to one circulation regime, the thermal energy carrying fluid is circulated continuously through all secondary bore holes 16. However, in an alternative non-continuous circulation regime, it may be advantageous to circulate the fluid in the different secondary bore holes 16 intermittently, such that, for each secondary bore hole 16, a production phase during which the fluid is circulated is interspersed with a non-production phase during which the fluid is not circulated. If such a non-continuous circulation regime is used, it may be advantageous to shift the production and non-production phases between the different secondary bore holes 16 in a periodic fashion such that at least one secondary bore hole 16 is in the non-production phase at all times. For a comparable total flow rate of the well, the non-continuous circulation regime will allow a higher flow rate of the fluid in the production phase as compared to the flow rate of the continuous circulation regime. For the non-continuous circulation regime, this will reduce heat loss from the upwardly flowing fluid during the return leg of the fluid and also reduce the time available for heat to be transferred to the colder, downwardly flowing fluid.

Although it is contemplated that the above-disclosed method is to be used for exploiting deep lying geothermal formations, e.g. exceeding 2000 m, it is to be noted that the method, in principal, also can be used for exploiting such formations which lie relatively shallow.

In the preceding description, various aspects of the invention have been described with reference to the illustrative embodiments. However, a person skilled in the art will realise that various alternatives, modifications and variations of the illustrative embodiments are possible within the scope of the following claims.

For example, it is to be understood that the boring initiation arrangement 10 may be comprised of a plurality of sections or units, each having a different function. For example, in addition to the above-discussed valve system 31 and the pump unit for assisting the circulation of the drilling fluid and the thermal carrying fluid, the boring initiation arrangement 10 may comprise a sensor unit comprising sensory equipment for monitoring the operation of the well equipment and/or the well environment. The section or units need not necessarily be deployed in the primary bore hole 1 at the same time.

Also, the skilled person will realise that the disclosed method can be used for establishing and operating hydrocarbon wells, e.g. to stimulate the production of hydrocarbon. For example, in order to increase the recovery of hydrocarbons in a hydrocarbon well, the method may be utilised to establish a plurality of secondary bore holes extending from an already established primary bore hole, whereby blowout preventing means need only be put into place in the primary bore hole upstream of the secondary bore holes, thus allowing safe and efficient collection of hydrocarbons originating from the different secondary bore holes. Also, it is understood that the at least one conduit which is deployed in the secondary bore holes according to the invention can be utilised in a number of ways in a hydrocarbon well, e.g. to inject a fluid into the secondary bore hole.

## Claims

1. A method of establishing a well, comprising the steps of:
- establishing a first, primary bore hole (1) using a first boring apparatus (4),
- establishing a plurality of secondary bore holes (16) extending from the primary bore hole (1), wherein each secondary bore hole (16) is established using a second boring apparatus (11), and wherein each second boring apparatus (11) comprises a down-hole boring unit (12) which is arranged to deploy at least one conduit (14, 15) in the secondary bore hole (16) during the establishment of the secondary bore hole (16), and
- for each secondary bore hole (16), when the establishment of the secondary bore hole (16) is completed, utilising the at least one conduit (14, 15) as part of a conduit system to bring a fluid down and/or up the secondary bore hole (16).

2. The method according to claim 1, comprising the step of utilising said at least one conduit (14, 15) as a part of a circulation system to circulate a drilling fluid in the secondary bore hole (16) during the establishment of the secondary bore hole (16).

3. The method according to any one of claims 1 and 2, comprising the step of:
- pulling said first boring unit (5) from the primary bore hole (1) prior to said step of establishing said plurality of secondary bore holes (16).

4. The method according to any one of claims 1-3, comprising the step of, prior to the step of establishing said secondary bore holes (16), lowering into the primary bore hole (1) a boring initiation arrangement (10) comprising guiding means for guiding each second boring unit (12) in a desired direction during the initial stage of the establishment of the secondary bore hole (16).

5. The method according to any one of claims 1-3, comprising the step of, prior to the step of establishing said secondary bore holes (16), lowering into the primary bore hole (1) a boring initiation arrangement (10) comprising one or a plurality of said second boring units (12).

6. The method according to any one of claims 1-5, wherein the step of establishing said plurality of secondary bore holes (16) comprises establishing the secondary bore holes (16) to extend from the primary bore hole (1) into a thermal energy carrying geological formation (3), and wherein the step of utilising said at least one conduit (14, 15) as part of a conduit system comprises utilising the at least one conduit (14, 15) as part of a circulation system to circulate a thermal energy carrying fluid in the secondary bore hole (16).

7. The method according to claim 6, wherein the step of utilising said at least one conduit (14, 15) as part of a circulation system comprises:
- circulating the thermal energy carrying fluid down-hole in an annular space (27) formed between the at least one conduit (14, 15) and an inner wall of the secondary bore hole (16), and
- circulating the thermal energy carrying fluid up-hole in the at least one conduit (14, 15).

8. The method according to claim 6, wherein the step of utilising the at least one conduit (14, 15) as part of a circulation system comprises:
- circulating the thermal energy carrying fluid down-hole in the at least one conduit (14, 15), and
- circulating the thermal energy carrying fluid up-hole in an annular space (27) formed between the at least one conduit (14, 15) and an inner wall of the secondary bore hole (16).

9. The method according to claim 6, wherein said at least one conduit (14, 15) comprises at least one first conduit (14) and at least one second conduit (15), and wherein the step of utilising the at least one conduit (14, 15) as part of a circulation system comprises:
- circulating the thermal energy carrying fluid down-hole in the at least one first conduit (14), and
- circulating the thermal energy carrying fluid up-hole in the at least one second conduit (15).

10. The method according to claim 9, comprising the step of establishing, for each second boring unit (12), a by-pass conduit (21) between the at least one first conduit (14) and the at least one second conduit (15) such that a closed circulation of the thermal energy carrying fluid is enabled.

11. The method according to any one of claims 9 and 10, comprising the step of utilising said at least one first conduit (14) and said at least one second conduit (15) to lead the thermal energy carrying fluid down and up, respectively, the primary bore hole (1).

12. The method according to any one of claims 6-11, comprising the step of, when said step of establishing the secondary holes (16) is completed, connecting said at least one conduit (14, 15) emerging from at least two of the secondary bore holes (16) to a common up-hole conduit (24) running up through the primary bore hole (1) to the surface (2) of the well.

13. The method according to any one of claims 6-12, wherein the circulation of the thermal energy carrying fluid in each secondary bore hole (16) is continuous.

14. The method according to any one of claims 6-12, wherein the circulation of the thermal energy carrying fluid in each secondary bore hole (16) is non-continuous.

15. The method according to claim 14, wherein, for each secondary bore hole (16), a production phase during which the thermal energy carrying fluid is circulated is interspersed with a non-production phase during which the thermal energy carrying fluid is not circulated.

16. The method according to claim 15, wherein the production and non-production phases are shifted between the secondary bore holes (16) in a periodic fashion.

17. The method according to any one of the preceding claims, wherein the second boring units (12) are left in the secondary bore holes (16) when the secondary bore holes (16) have been established.

18. A well, **characterised in that** it is established according to the method according to any one of claims 1-17.

19. The well according to claim 18, **characterised in that** the well is for exploitation of geothermal energy.

20. The well according to claim 18, **characterised in that** the well is for productions of hydrocarbons.

21. A boring initiation arrangement (10) arranged to be lowered into a primary bore hole (1) for initiating the establishment of a plurality of secondary bore holes (16) extending from the primary bore hole (1) in a well, **characterised in that** the boring initiation arrangement (10) comprises guiding elements for guiding a plurality of boring units (12) in different, controlled directions at the initial stage of the establishment of the secondary bore holes (16).

22. The boring initiation arrangement (10) according to claim 21, **characterised in that** it comprises a plurality of boring units (12) which are positioned in the boring initiation unit (10) in order to enable concurrent deployment of the boring units (12) in the different, controlled directions.
